# EUROPEAN PATENT SPECIFICATION

(11) **EP 3 840 586 B1**
(45) Date of publication and mention of the grant of the patent: **20.03.2024**
(21) Application number: 19758409.7
(22) Date of filing: 23.08.2019
(51) Int. Cl.: A23K 10/38, A21D 13/047, A21D 2/38, A23B 9/26, C12F 3/06

(54) **A PROCESS FOR MICROBIAL STABILIZATION AND PROCESSING OF BREWERS SPENT GRAIN**
VERFAHREN ZUR MIKROBIELLEN STABILISIERUNG UND VERARBEITUNG VON BIERTREBERN
PROCÉDÉ DE STABILISATION MICROBIENNE ET DE TRAITEMENT DE DRÊCHES DE BRASSERIE

(30) Priority: 24.08.2018 BE 201805588
(43) Date of publication of application: 30.06.2021
(73) Proprietor: Anheuser-Busch InBev S.A., 1000 Brussels (BE)
(72) Inventor: GIL-MARTINEZ, Jorge, 3000 Leuven (BE); ARENDT, Elke, Cork City Ireland Cork City, T12 YT20 (IE); MUENCH, Steffen, 3000 Leuven (BE)
(74) Representative: Marks & Clerk LLP
(86) International application number: PCT/EP2019/072584
(87) International publication number: WO 2020/039068

(56) References cited:
- BE-B1- 1 024 957
- DE-U1- 9 420 637
- US-A- 3 846 397
- PRAVEEN JOHNSON ET AL: "Issues with utilisation of brewers' spent grain", STEWART POSTHARVEST REVIEW, vol. 6, no. 4, 1 January 2010 (2010-01-01) , pages 1-8, XP055574774, DOI: 10.2212/spr.2010.4.2
- REMÍGIO M. MACHADO ET AL: "Dewatering of brewer's spent grain using an integrated membrane filter press with vacuum drying capabilities", SEPARATION SCIENCE AND TECHNOLOGY, vol. 51, no. 4, 24 November 2015 (2015-11-24), pages 692-700, XP055524025, ISSN: 0149-6395, DOI: 10.1080/01496395.2015.1117102
- S Öztürk ET AL: "Effects of Brewer's Spent Grain on the Quality and Dietary Fibre Content of Cookies", Journal of the Institute of Brewing, 1 January 2002 (2002-01-01), pages 23-27, XP055427236, DOI: 10.1002/j.2050-0416.2002.tb00116.x Retrieved from the Internet: URL:http://onlinelibrary.wiley.com/store/1 0.1002/j.2050-0416.2002.tb00116.x/asset/j. 2050-0416.2002.tb00116.x.pdf?v=1&t=ja9ihie 1&s=67721a800c46848b56c79141cea310512506b3 cc [retrieved on 2017-11-21]
- AL-HADITHI ET AL: "Study of the possibility of using some organic acids as preservatives for brewery by-products", JOURNAL OF AGRICULTURE AND WATER RESOURCES RESEARCH : JAWRR, SCIENTIFIC RESEARCH COUNCIL * AGRICULTURAL AND WATER RESOURCES RESEARCH CENTER, BAGHDAD (IRAQ), vol. 4, 1 January 1985 (1985-01-01), pages 229-242, XP009503530,
- MUSSATTO S I ET AL: "Brewers' spent grain: generation, characteristics and potential applications", JOURNAL OF CEREAL SCIENCE, ACADEMIC PRESS LTD, GB, vol. 43, no. 1, 1 January 2006 (2006-01-01), pages 1-14, XP024904939, ISSN: 0733-5210, DOI: 10.1016/J.JCS.2005.06.001 [retrieved on 2006-01-01]

## Description

### FIELD OF THE INVENTION

The present invention concerns a process for treating brewers' spent grains (BSG) obtained from the brewing process such that the growth of microbes in said grains and subsequent production of microbial toxins are kept below levels herewith specified (microbial stabilization) and that the processed BSG can be easily transported and processed as a food-ingredient in for example given bakery products. This invention covers a method for acidification of BSG with one or a combination of acids, or organic acids, or food-grade organic acids to achieve microbial stability of BSG. The invention further concerns the stability of BSG for longer time periods than currently possible, the consequential expansion in the range of applications for MS-BSG and the necessary increase in value of MS-BSG originating from said applications.

### BACKGROUND TO THE INVENTION

Brewers' spent grain (BSG) is the most abundant co-product generated in the beer-brewing process, making up to 85% of total waste products. This material consists of the barley grain husks obtained as solid portion after wort filtration. Since BSG is rich in carbohydrates and proteins, the main use to date for the utilization of this product has been as animal feed.

Beyond the conventional use as cattle feed, several other applications have been proposed for BSG (reviewed by Mussatto et al., 2006 ¹ and Xiros and Christakopoulos, 2012 ²): energy production in the form of direct combustion, reduction to BSG charcoal or for biogas production; as a raw material for brick building and paper making; in biotechnology applications such as enzyme production, and propagation of microorganisms and; fractionation and enrichment of high-value components, such as proteins or phenolic compounds.

However, the nutritional value of BSG also makes it an interesting candidate for human foodstuff or ingredient. Several applications of BSG as food or food ingredient have been described (reviewed by Mussatto et. Al, 2006 ¹ and Lynch et al., 2016 ³). Brewers' spent grain has been used as an ingredient for baking goods such as bread, cookies, bread sticks, baked snacks and also sausages and as a beverage additive. A number of health benefits are associated with including BSG in a diet, including reduction of postprandial blood glucose levels, lowering of cholesterol, prebiotic, immunomodulatory and antioxidant activities.

Microbial stability is a major concern in the use of BSG for either animal or human consumption. The availability of water, sugars and proteins make BSG an attractive substrate for microbes, which can quickly colonize it and compromise its integrity for its subsequent use as food. There are problems associated with microbial spoilage of BSG: first, the possibility of growth of pathogenic microbes, next, the depletion of nutrients from BSG by spoilage microorganisms and, last, the production of toxic compounds by fungi. The latter is of concern, particularly the production of stable mycotoxins.

The very short stability of wet BSG has been identified as an obstacle for its use as animal feed, human food or human food ingredient. Without an effective preservation method, BSG becomes quickly infected by microbes. This compromises the nutritional integrity and general food safety of BSG.

Current methods for preventing spoilage of BSG include (reviewed by Mussato et al., 2006):
- Drying in a rotary-drum drier or in an oven. The former consumes large amounts of energy while the latter can introduce unpleasant aromas and flavors to BSG derived from chemical reactions at high drying temperatures. An alternative experimental method of drying involves the use of superheated steam ⁵.
- Freezing. Storage of large amounts of frozen BSG is not practical or economical. Additionally, thawed BSG can have a lower arabinose content than fresh BSG, possibly due to microbial growth during thawing ⁶.
- Pressing and vacuum packing. Good stability of BSG was achieved by EI-Shafey et al. (2004) ⁷ using a membrane filter press coupled with vacuum drying. The resulting BSG had 20% moisture which was reduced to 10% after storing in open air. No microbial growth was observed up to 6 months after treatment ⁷.
- Preservation of BSG using organic acids was investigated by Al Hadithi et al. (1985 ⁸, as quoted by Mussato et al., 2006). They found that organic acids prevented spoilage and preserved the nutritional value of BSG for long periods of time.

Acidification is a traditional means of preserving food. Food can be acidified either by direct addition of acid (e.g. pickling with vinegar), by microbial fermentation of food by lactic or acetic acid bacteria species (e.g. sauerkraut, kimchi) or a combination of both. The low pH (<4.1) and presence of organic acids inhibits the growth of most harmful bacteria and fungi. Moreover, lactic and acetic acid are generally perceived as pleasant in food at the right concentrations and are considered harmless to human health.

Brewing manufacturing process are in place to keep the final product, beer, but not its co-products, microbiologically stable. Brewers' spent grain is not microbiologically compromised out of the filter or lauter tun. The temperature conditions during mashing and filtering are up to 75°C. Out of the filter, BSG has relatively low counts of microbes, with the exception of thermophilic bacteria, and can be considered microbiologically stable ⁴. However, as the grains cool down, and because the grains are treated as a waste product without any food safety concerns, mesophilic bacteria and fungi are able to grow on them. After one day of storage at 25°C, the colony count of bacteria (aerobic and anaerobic) and fungi increases from less than 100 colony forming units (CFU) per gram of BSG to 10⁵ and 10⁸ CFU/gram, respectively. After two days, all microbes are found in the 10⁸ CFU/gram order of magnitude.

Mycotoxins are a type of compound produced by fungi which grow on cereal crops. They can be toxic and deadly for humans and animals if consumed in high doses. Because of this, they are of great concern to the cereal food industry, and to the brewing industry, and limits have been set for the maximum levels allowed in food. Fungal contamination of BSG can result in the production of mycotoxins, which is an irreversible process, i.e. once the level of mycotoxins in BSG is above a set limit, it is considered unsafe for consumption.

Considering the time frames on which microbial growth and spoilage occurs after BSG has left the filter/lauter tun, the opportunities for its use as animal or human food ingredient are limited. Within hours, BSG microbial and/or mycotoxin levels can be above the recommended levels for human consumption.

BE1024957B1 discloses a process for the microbiological stabilization of BSG, the process comprising the steps of: producing a mash containing barley malt; separating the mash from BSG; collecting the BSG; and, acidifying the BSG.

Johnson et al, Stewart Postharvest Review, 2010, 6(4), 1-8 reviews the utilisation of the bulkgenerated brewery by-product BSG. Various aspects of the commonly-used preservation technique drying are discussed.

Machado et al, Separation Science and Technology, 2015, 51(4), 692-700 presents a process for dewatering BSG using two different sets of membrane filter plates in a filter press with vacuum drying.

DE 94 20 637 U1 discloses a feed based on preserved draff and/or marc and a plant for producing the feed.

Öztürk et al, Journal of the Institute of Brewing, 2002, 23-27 discloses dried and ground BSG blended with soft wheat flour at levels of 5-25% for the production of wire-cut cookies.

US 3 846 397 A discloses grain residues from mashed barley malt that are separated from wort thereby produced and heated in an alkaline solution to solubilize protein.

The use of BSG as human food or food ingredient requires that BSG be available at its freshest state and yet in an easy to transport and processable state, before any significant microbial growth and/or mycotoxin production compromises its integrity. For any food production process, this poses an incredibly difficult operational barrier. Therefore, there remains a need for keeping the integrity of BSG for use as human food or food ingredient.

### SUMMARY OF THE INVENTION

The present invention concerns a process for stabilizing fresh brewer's spent grains (BSG) microbiologically, the process comprising the steps of:
- Producing a mash comprising barley malt;
- Separating the mash from BSG;
- Collecting the BSG;
- Microbiologically stabilizing the collected BSG by acidifying the BSG to a pH of 4 or lower, such that the BSG:
   is acidified prior to reaching mycotoxin levels higher than 3µg/kg Ochratoxin A (OTA), higher than 750 µg/kg deoxynivalenol (DON), higher than 20 µg/kg nivalenol (NIV), and higher than 75 µg/kg zearalenone (ZEA); and/or,
   has a colony count of not higher than 10³ CFU/g MS-BSG total aerobic bacteria; not higher than 10³ CFU/g MS-BSG fungi; not higher than 10³ CFU/g MS-BSG yeast; not higher than 10³ CFU/g MS-BSG mesophilic aerobic bacteria; and not higher than 10³ CFU/g MS-BSG total anaerobic bacteria, after one week of storage at 25°C;
   wherein said MS-BSG slurry is separated into a water soluble and water insoluble fraction by filtration or decanting to obtain said water soluble fraction as a liquid phase (permeate) comprising salts, oligosaccharides, water soluble proteinaceous material and water soluble arabinoxylans; and said water insoluble fraction as a wet solid phase comprising precipitated proteins and water-insoluble arabinoxylans;
- drying said fractions; and
- Powdering said fractions to a powder, wherein said powder has an average mean particle size of below 1.4 mm.

More specifically, the use of food-grade organic acids makes the resulting BSG microbiologically stable and safe for human consumption. Even more specifically, the use of a combination of 0.4% lactic acid and 0.4% acetic acid results in a microbiologically stable product, safe for human consumption with acceptable organoleptic characteristics.

An objective of this invention is to render BSG microbiologically stable over longer periods of time than currently possible and readily transportable and processable as a food ingredient. As a result, the range of applications of MS-BSG is much broader than that of untreated BSG, rendering MS-BSG into a much more valuable raw material than untreated BSG.

### DEFINITIONS

BSG consists of the seed coat-pericarp-husk layers that covered the original barley grain. The starch content is usually low, and the composition of BSG mainly contains fibers , which are non-starch polysaccharides (NSP, ~38%; hemicellulose in the form of arabinoxylans (AX) and cellulose) and significant quantities of proteins (~19%), lignin (~15%), bound phenolics (10%), lipids (~10%) and ash (5%) ⁴. Therefore, BSG is basically a lignocellulosic material. This high fiber and protein content makes BSG an interesting raw material for food applications.

As it is released from the wort filter or lauter tun, BSG can contain anywhere from 70 to 85% water. The high level of water and presence of nutrients make BSG a good substrate for bacterial and fungal growth. In fact, fresh BSG is quickly colonized by different types of bacterial and fungal species if no measures are taken against this. After two days of incubation of BSG at 25ºC, there is an increase of total bacteria, mesophilic bacteria, anaerobic bacteria and fungi to 10⁷-10⁸ CFU/g of BSG. Storage of BSG at 25 and 35°C is also associated with a decrease in the nutritional value of BSG: there is a decrease in total protein, soluble sugars and total dry mass of the BSG ⁹.

Wang et al. (2014) ⁹and the authors here have observed a significant increase in both yeast and mold in BSG after 2 days storage at 25ºC. In both cases, mold colony counts are as high as 10⁶ after 1 day and 10⁸ after 2 days ⁹ ( and Lynch, unpublished). There is evidence that portion of the mold community in stored BSG is composed of mycotoxin-producing molds, such as *Penicillum* and *Fusarium* species ¹⁰.

Mycotoxins are compounds produced by fungi that infect food crops. They are particularly prevalent in cereal crops, such as in barley or wheat used for brewing. Different types of mycotoxins have various effects on the health of animals that are fed the contaminated crop. Mycotoxins are very stable molecules, resisting cold or heat treatments, and even animal digestion, which means they can enter human food chain through contaminated animals.

The main fungi affecting barley are those of *Fusarium* genus ^{11,12}. *Fusarium* species produce a variety of toxins, including zearalenone (ZEA) and the trichocethenes nivalenol (NIV) and deoxynivalenol (DON). Table 1 shows the maximum levels allowed in Europe for these mycotoxins and for ochratoxin A (OTA) (full dataset is found in ¹³⁻¹⁶).

**Table 1 Maximum levels of mycotoxins allowed in foodstuff and animal feed in Europe.**

| Toxin | Max. in cereals for human consumption (µg/kg) | Max. in cereals for animal feed (µg/kg) |
|---|---|---|
| Deoxynivalenol (DON) | 750 | 900 |
| Zearalenone (ZEA) | 75 | 100 |
| Ochratoxin A (OTA) | 3 | 50 |

Reducing the pH of BSG using an acid compound to no more than 4 pH units significantly inhibits the growth of total and aerobic mesophilic bacteria in BSG stored at 25°C. We find 10^{2.7} and 10² CFU total and mesophilic bacteria, respectively, per gram acidified BSG after 1 week storage at 25°C. More specifically, we find 10³ and 10^{2.1} CFU total and mesophilic bacteria, respectively, per gram of acidified BSG after 2 weeks storage at 25°C
Reducing the pH of BSG using an acid compound to no more than 4 pH units significantly inhibits the growth of mold in BSG stored at 25°C. We find 10²-10^{2.4} CFU/g acidified BSG after 1 week storage at 25°C, and more specifically, less than 10² CFU/g acidified BSG after two weeks storage at 25°C.

The levels of mycotoxins monitored in acidified BSG after one week storage at 25°C are correspondingly low: DON, not detected (detection threshold (DT) = 20 µg/kg); NIV, not detected (DT = 20 µg/kg); ZEA, not detected (DT = 30 µg/kg) and; OTA, 0.6 µg/kg (DT = 0.5 µg/kg).

Therefore, one object of this invention is to reduce the content of mycotoxins in brewers' spent grain (BSG) for animal or human consumption by minimizing the proliferation of mycotoxin-producing fungi by means of acidification of BSG.

In this invention, acidification of BSG results in a microbiologically stable BSG (MS-BSG) with the same protein, soluble fiber and insoluble fiber values as fresh BSG, with bacterial and fungal counts not higher than 10³ CFU/g after two weeks storage at 25°C, and with low or undetectable levels of mycotoxins after one week of storage at 25°C.

An additional object of this invention is to produce microbially stable BSG (MS-BSG) powder with organoleptical characteristics that are agreeable to consumers. In this invention, a mixture of acetic acid and lactic acid to a final concentration of 0.4% each are used as acidifying agents. Acetic acid is more volatile (vapor pressure = 15.8 mm Hg at 20°C) than lactic acid (0.0813 mm Hg at 20°C). Acetic acid has a lower detection threshold (200 mg/L in beer) than lactic acid (400 mg/L in beer). At high concentrations, acetic acid has a pungent, vinegar-like aroma. We examined the impact of acetic acid concentration in MS-BSG on consumer acceptance of downstream beverage product made with MS-BSG. MS-BSG acidified with various acetic acid concentrations was used to produce a base for a fermented beverage. MS-BSG was milled, its pH brought up to 6.1 pH units, treated with saccharification enzymes and fermented with lactic acid bacteria. We found that levels of acetic acid higher than 0.4% in the starting MS-BSG resulted in consumer rejection of the fermented MS-BSG beverage and that a beverage made with MS-BSG stabilized with 0.4% lactic acid and no more than 0.4% acetic acid was accepted by a consumer panel.

### DETAILED DESCRIPTION OF THE INVENTION

Fresh brewers' spent grain (BSG) with a moisture content of 70% is retrieved from the wort filter or lauter tun. Fresh BSG is preferably processed no later than 8 hrs from release from the filter/lauter tun and are preferably collected by transferring the BSG from a mash separation unit to a collection tank by or through a BSG transfer line, wherein the acidification of the BSG is done during transfer of the BSG to the collection tank. Preferably, BSG is processed 'in-line' as it is conveyed from the filter/lauter tun to storage or transport vessels.

The present invention, amongst others, concerns the process of chemical acidification of BSG by addition of one or a combination of acid compounds to reduce the pH of BSG to a level not higher than 4.0 pH units, more specifically 3.85-3.95 pH units. Specifically, the process makes use of one or a combination of organic acids such as, but not limited to lactic acid, acetic acid, citric acid, benzoic acid, malic acid, formic acid or ascorbic acid to reduce the pH of BSG to a level not higher than 4.0 pH units, more specifically 3.85-3.95 pH units. Even more specifically, the process makes use of 0.4% food-grade acetic and 0.4% food-grade lactic acid to reduce the pH of BSG to a level not higher than 4.0 pH units, more specifically 3.85-3.95 pH units and to obtain a sensorially agreeable product.

It is the object of this invention to provide microbiologically stable BSG (MS-BSG) powder which is characterized by:
- a pH level not higher than 4.0 pH units, more specifically 3.85-3.95 pH units
- the same nutritional value as fresh BSG
- after one week storage at 25°C, a colony count not higher than 10³ CFU/g MS-BSG total aerobic bacteria and; not higher than 10³ CFU/g MS-BSG fungi and; not higher than 10³ CFU/g MS-BSG yeast and; not higher than 10³ CFU/g MS-BSG mesophilic aerobic bacteria and; not higher than 10³ CFU/g MS-BSG total anaerobic bacteria
- after one week storage at 25°C, mycotoxin levels not higher than 3µg/kg Ochratoxin A (OTA), preferably not higher than 1µg/kg OTA, even more preferably undetectable levels of OTA and; not higher than 750 µg/kg deoxynivalenol (DON), preferably not higher than 20 µg/kg DON, even more preferably undetectable levels of DON and; 20 µg/kg nivalenol (NIV), more preferably undetectable levels of nivalenol and; not higher than 75 µg/kg zearalenone (ZEA), preferably not higher than 30 µg/kg ZEA, and more preferably undetectable levels of ZEA

In one embodiment of this invention, fresh BSG is mixed with stock solutions of acetic acid and lactic acid, to a final concentration of 0.4% each, in storage vessels no later than 8 hrs after release from filters/lauter tun.

In the preferred embodiment of this invention, fresh BSG is mixed with stock solutions of acetic and lactic acid, to a final concentration of 0.4% each, 'in-line' as it is conveyed from filter/lauter tun to storage. This embodiment represents the most efficient application of the method here described.

In accordance with the present invention, the stabilized BSG (MS-BSG) is dried and further processed into a powder.

After drying, the MS-BSG can be processed into a powder by milling or cutting the dried matter into fine particles with an average mean particle size of below 1.4 mm, preferably ranging between 10 micron and 700 micron, more preferably between 250 and 650 micron.

The MS-BSG slurry is first separated into fractions by filtration or decanting to obtain said water soluble fraction as a liquid phase (permeate) comprising salts, oligosaccharides, water soluble proteinaceous material and water soluble arabinoxylans; and said water insoluble fraction as a wet solid phase comprising amongst others precipitated proteins and water-insoluble arabinoxylans.

Both fractions can subsequently be dried independently from one another by conventional drying methods such as freeze drying, lyophilization, heating, press-drying, vacuum evaporation, air drying or combinations of one or more of such techniques. Also spray-drying can be used to dry and powderize the liquid phase in a single processing step. In this last case, further powdering or reduction of the powder particle size can be achieved by milling or mixing.

The two powderized streams can either be kept separate, i.e. one powder originating from the permeate and one powder originating from the retentate or both powders can be blended/mixed together in a preferred ratio.

As prior to the drying and the powderization, the BSG material was microbiologically stabilized, the powder itself, if handled with due care according to HCCP standards, is microbiologically stable.

The above described microbiologically stable brewers' spent grain (MS-BSG) powder can be used in the following applications:
- Animal feed. MS-BSG powder can be used as feed or feed complement for animals. More specifically, it can be used as feed or feed complement for ruminant cattle, such as dairy cows.
- As human food or food ingredient. MS-BSG powder can be used as an ingredient in the manufacture of foods such as breads, cookies, cereal products, baked snacks, extrusion cooked snacks, candy bars or pasta products; and/or in the manufacture of food ingredients such as flours; and/or in the manufacture of dietary supplements such as fiber supplements.

The brewer's spent grain is preferably obtained from a regular beer production process, wherein malt and potentially some adjuncts such as corn, rice, sorghum, wheat, barley, rye, oat or combinations thereof are mixed with water to form a mash wherein enzymes - either originating from the barley malt or added separately to the mash - are allowed to break down starch into fermentable sugars, typically a mixture of glucose, maltose and maltotriose. At the end of the mashing, the mash is filtered to obtain a fermentable wort that is further processed in to beer. The retentate of the mash filtering is the brewer's spent grain (BSG) that is subsequently stabilized by a method described supra.

### REFERENCES

1. Mussatto, S. I., Dragone, G. & Roberto, I. C. Brewers' spent grain: Generation, characteristics and potential applications. J. Cereal Sci. 43, 1-14 (2006).
2. Xiros, C. & Christakopoulos, P. Biotechnological potential of brewers spent grain and its recent applications. Waste and Biomass Valorization 3, 213-232 (2012).
3. Lynch, K. M., Steffen, E. J. & Arendt, E. K. Brewers' spent grain: a review with an emphasis on food and health. J. Inst. Brew. 122, 553-568 (2016).
4. Robertson, J. A. et al. Profiling brewers' spent grain for composition and microbial ecology at the site of production. LWT - Food Sci. Technol. 43, 890-896 (2010).
5. Tang, Z., Cenkowski, S. & Izydorczyk, M. Thin-layer drying of spent grains in superheated steam. J. Food Eng. 67, 457-465 (2005).
6. Bartolomé, B., Santos, M., Jiménez, J. J., del Nozal, M. J. & Gómez-Cordovés, C. Pentoses and Hydroxycinnamic Acids in Brewer's Spent Grain. J. Cereal Sci. 36, 51-58 (2002).
7. EI-Shafey, E. I. et al. Dewatering of Brewer's Spent Grain Using a Membrane Filter Press: A Pilot Plant Study. Sep. Sci. Technol. 39, 3237-3261 (2004).
8. Al-Hadithi, A. N., Muhsen, A. A. & Yaser Baghdad (Iraq). Agriculture and Water Resources Research Centre), A. A. (Scientific R. C. A study on the possibility of using some organic acids as preservatives for brewer's by products. (1985).
9. Wang, B., Luo, Y., Myung, K. H. & Liu, J. X. Effects of storage duration and temperature on the chemical composition, microorganism density, and in vitro rumen fermentation of wet brewers grains. Asian-Australasian J. Anim. Sci. 27, 832-840 (2014).
10. Simas, M. M. S. et al. Determination of fungal microbiota and mycotoxins in brewers grain used in dairy cattle feeding in the State of Bahia, Brazil. Food Control 18, 404-408 (2007).
11. Pinotti, L., Ottoboni, M., Giromini, C., Dell'Orto, V. & Cheli, F. Mycotoxin contamination in the EU feed supply chain: A focus on Cereal Byproducts. Toxins (Basel). 8, (2016).
12. Food and Agriculture Organization of the United Nations & World Health Organization. Code of Practice for the Prevention and Reduction of Mycotoxin Contamination in Cereals. 1-11 (2014).
13. European Commision. COMMISSION REGULATION (EC) No 1883/2006 of 19 December 2006 laying down methods of sampling and analysis for the official control of levels of dioxins and dioxin-like PCBs in certain foodstuffs (Text with EEA relevance). Off. J. Eur. Union 49, 5-24 (2006).
14. European Commission. 2013/165/EU: Commission Recommendation of 27 March 2013 on the presence of T-2 and HT-2 toxin in cereals and cereal products Text with EEA relevance. Off. J. Eur. Union 56, 12-15 (2013).
15. European Commission. Commission Recommendation of 17 August 2006 on the presence of deoxynivalenol, zearalenone, ochratoxin A, T-2 and HT-2 and fumonisins in products intended for animal feeding. Off. J. Eur. Union 49, 7-9 (2006).
16. The European Parliament and the Council of the European Union. Directive 2002/32/EC of the European Parliament and of the Council of 7 May 2002 on undesirable substances in animal feed. 1-30 (2002).

## Claims

1. A process for processing fresh brewer's spent grains (BSG), the process comprising the steps of:
• Producing a mash comprising barley malt;
• Separating the mash from BSG;
• Collecting the BSG;
• Microbiologically stabilizing the collected BSG to obtain a MS-BSG slurry by acidifying the BSG to a pH of 4 or lower, such that the BSG:
is acidified prior to reaching mycotoxin levels higher than 3µg/kg Ochratoxin A (OTA), higher than 750 µg/kg deoxynivalenol (DON), higher than 20 µg/kg nivalenol (NIV), and higherthan 75 µg/kg zearalenone (ZEA); and/or,
has a colony count of not higher than 10³ CFU/g MS-BSG total aerobic bacteria; not higher than 10³ CFU/g MS-BSG fungi; not higher than 10³ CFU/g MS-BSG yeast; not higher than 10³ CFU/g MS-BSG mesophilic aerobic bacteria; and not higher than 10³ CFU/g MS-BSG total anaerobic bacteria, after one week of storage at 25°C;
wherein said MS-BSG slurry is separated into a water soluble and water insoluble fraction by filtration or decanting to obtain said water soluble fraction as a liquid phase (permeate) comprising salts, oligosaccharides, water soluble proteinaceous material and water soluble arabinoxylans; and said water insoluble fraction as a wet solid phase comprising precipitated proteins and water-insoluble arabinoxylans;
• drying said fractions; and
• powdering said fractions to a powder, wherein said powder has an average mean particle size of below 1.4 mm.

2. The process according to claim 1, wherein said powder has an average mean particle size of between 10 micron and 700 micron.

3. The process according to claim 1 or 2, wherein said drying and powdering of the liquid phase occurs by spray-drying.

4. The process according to claim 1, comprising mixing or blending the dried water soluble and dried water insoluble fractions.

5. The process according to claim 1, wherein the BSG is acidified to a pH of between 3.85-3.95 within a time frame of 8 hours after the separation of the mash from the BSG.

6. The process according to any one of claims 1 to 5, wherein acidification is achieved by the addition of one or more acids selected from the group consisting of lactic acid, acetic acid, benzoic acid, malic acid, formic acid and ascorbic acid.

7. The process according to claim 6, wherein acidification is achieved by the addition of 0.4% food-grade acetic acid and 0.4% food-grade lactic acid.

8. The process according to any of the preceding claims, wherein the BSG is collected by transferring the BSG from a mash separation unit to a collection tank by or through a BSG transfer line, and wherein the acidification of the BSG is done during transfer of the BSG to the collection tank.

9. A process for preparing a food or food ingredient, wherein the process comprises carrying out a process according to any of Claims 1-8 and, after powdering said fractions, using a powder thereby obtained as an ingredient in the manufacture of a food or food ingredient.

10. The process according to Claim 9, wherein the food ingredient is a flour.

11. The process according to Claim 9, wherein the food is selected from breads, cookies, cereal products, baked snacks, extrusion cooked snacks, candy bars and pasta products.

12. The process according to Claim 9, wherein the food or food ingredient is a fiber supplement.

## Patentansprüche

1. Verfahren zur Verarbeitung von frischem Biertreber (BSG), wobei das Verfahren die folgenden Schritte umfasst:
• das Erzeugen einer Maische, die Gerstenmalz umfasst;
• das Trennen der Maische vom BSG;
• das Sammeln des BSG;
• das Mikrobiologische Stabilisierung des gesammelten BSG, um einen MS-BSG-Schlamm zu erzielen, indem der BSG auf einen pH-Wert von 4 oder weniger angesäuert wird, sodass der BSG:
angesäuert wird, bevor Mykotoxingehalte von mehr als 3 µg/kg Ochratoxin A (OTA), mehr als 750 µg/kg Deoxynivalenol (DON), mehr als 20 µg/kg Nivalenol (NIV) und mehr als 75 µg/kg Zearalenon (ZEA) erreicht werden; und/oder,
nach einwöchiger Lagerung bei 25 °C eine Koloniezahl von nicht mehr als 10³ KBE/g MS-BSG gesamte aerobe Bakterien, nicht mehr als 10³ KBE/g MS-BSG Pilze, nicht mehr als 10³ KBE/g MS-BSG Hefe, nicht mehr als 10³ KBE/g MS-BSG mesophile aerobe Bakterien und nicht mehr als 10³ KBE/g MS-BSG gesamte anaerobe Bakterien aufweist;
wobei der MS-BSG-Schlamm durch Filtrieren oder Dekantieren in eine wasserlösliche und eine wasserunlösliche Fraktion getrennt wird, um die wasserlösliche Fraktion als flüssige Phase (Permeat) zu erzielen, die Salze, Oligosaccharide, wasserlösliches proteinhaltiges Material und wasserlösliche Arabinoxylane umfasst; und die wasserunlösliche Fraktion als nasse feste Phase, die ausgefällte Proteine und wasserunlösliche Arabinoxylane umfasst;
• das Trocknen der Fraktionen, und
• das Pulverisieren der Fraktionen zu einem Pulver, wobei das Pulver eine durchschnittliche Partikelgröße von unter 1,4 mm aufweist.

2. Verfahren nach Anspruch 1, wobei das Pulver eine durchschnittliche Partikelgröße zwischen 10 Mikrometern und 700 Mikrometern aufweist.

3. Verfahren nach Anspruch 1 oder 2, wobei die Trocknung und Pulverisierung der flüssigen Phase durch Sprühtrocknung erfolgt.

4. Verfahren nach Anspruch 1, umfassend das Mischen oder Vermengen der getrockneten wasserlöslichen Fraktion und der getrockneten wasserunlöslichen Fraktion.

5. Verfahren nach Anspruch 1, wobei der BSG innerhalb eines Zeitrahmens von 8 Stunden nach der Trennung der Maische von dem BSG auf einen pH-Wert zwischen 3,85 und 3,95 angesäuert wird.

6. Verfahren nach einem der Ansprüche 1 bis 5, wobei die Ansäuerung durch die Zugabe einer oder mehrerer Säuren, ausgewählt aus der Gruppe, bestehend aus Milchsäure, Essigsäure, Benzoesäure, Apfelsäure, Ameisensäure und Ascorbinsäure, erzielt wird.

7. Verfahren nach Anspruch 6, wobei die Säuerung durch die zusätzliche Zugabe von 0,4 % Essigsäure in Lebensmittelqualität und 0,4 % Milchsäure in Lebensmittelqualität erzielt wird.

8. Verfahren nach einem der vorhergehenden Ansprüche, wobei der BSG durch Überführen des BSG von einer Maische-Trenneinheit zu einem Sammelbehälter durch oder über eine BSG-Überführungsleitung gesammelt wird, und wobei die Ansäuerung des BSG während der Überführung des BSG in den Sammelbehälter erfolgt.

9. Verfahren zur Herstellung eines Lebensmittels oder einer Lebensmittelzutat, wobei das Verfahren die Durchführung eines Verfahrens nach einem der Ansprüche 1 bis 8 und, nach dem Pulverisieren der Fraktionen, die Verwendung eines dadurch erzielten Pulvers als Zutat bei der Herstellung eines Lebensmittels oder einer Lebensmittelzutat umfasst.

10. Verfahren nach Anspruch 9, wobei die Lebensmittelzutat ein Mehl ist.

11. Verfahren nach Anspruch 9, wobei das Lebensmittel ausgewählt ist aus Broten, Keksen, Getreideprodukten, gebackenen Snacks, extrusionsgegarten Snacks, Schokoriegeln und Nudelprodukten.

12. Verfahren nach Anspruch 9, wobei das Lebensmittel oder die Lebensmittelzutat ein Faserzusatz ist.

## Revendications

1. Procédé de traitement de drêches de brasserie fraîches (BSG), le procédé comprenant les étapes consistant à :
• produire une bouillie comprenant du malt d'orge ;
• séparer la bouillie des BSG ;
• collecter les BSG ;
• stabiliser microbiologiquement les BSG collectées pour obtenir une pâte MS-BSG en acidifiant les BSG à un pH de 4 ou moins, de sorte que les BSG :
soient acidifiées avant d'atteindre des niveaux de mycotoxine supérieurs à 3 µg/kg d'ochratoxine A (OTA), supérieurs à 750 µg/kg de désoxynivalénol (DON), supérieurs à 20 µg/kg de nivalénol (NIV), et supérieurs à 75 µg/kg de zéaralénone (ZEA) ; et/ou,
présentent un nombre de colonies ne dépassant pas 10³ UFC/g de bactéries aérobies totales de MS-BSG ; ne dépassant pas 10³ UFC/g de champignons MS-BSG ; ne dépassant pas 10³ UFC/g de levure MS-BSG; ne dépassant pas 10³ UFC/g de bactéries aérobies mésophiles MS-BSG ; et ne dépassant pas 10³ UFC/g de bactéries anaérobies totales MS-BSG, après une semaine de stockage à 25 °C ;
dans lequel ladite pâte de MS-BSG est séparée dans une fraction soluble dans l'eau et insoluble dans l'eau par filtration ou décantation pour obtenir ladite fraction soluble dans l'eau sous forme de phase liquide (perméat) comprenant des sels, des oligosaccharides, des matériaux protéiques solubles dans l'eau et des arabinoxylanes solubles dans l'eau ; et ladite fraction insoluble dans l'eau sous forme de phase solide humide comprenant des protéines précipitées et des arabinoxylanes insolubles dans l'eau ;
• sécher lesdites fractions ; et
• réduire en poudre lesdites fractions, dans lequel ladite poudre présente une taille de particule moyenne inférieure à 1,4 mm.

2. Procédé selon la revendication 1, dans lequel ladite poudre présente une taille de particule moyenne comprise entre 10 microns et 700 microns.

3. Procédé selon la revendication 1 ou 2, dans lequel ledit séchage et ladite réduction en poudre de la phase liquide se produit par séchage par pulvérisation.

4. Procédé selon la revendication 1, comprenant le mélange ou le malaxage de la fraction soluble dans l'eau séchée et de la fraction insoluble dans l'eau séchée.

5. Procédé selon la revendication 1, dans lequel les BSG sont acidifiées à un pH compris entre 3,85 et 3,95 dans un laps de temps de 8 heures après la séparation de la bouillie des BSG.

6. Procédé selon l'une quelconque des revendications 1 à 5, dans lequel l'acidification est réalisée par l'addition d'un ou plusieurs acides sélectionnés dans le groupe constitué d'acide lactique, d'acide acétique, d'acide benzoïque, d'acide malique, d'acide formique et d'acide ascorbique.

7. Procédé selon la revendication 6, dans lequel l'acidification est réalisée en ajoutant 0,4 % d'acide acétique de qualité alimentaire et 0,4 % d'acide lactique de qualité alimentaire.

8. Procédé selon l'une quelconque des revendications précédentes, dans lequel les BSG sont collectées en transférant les BSG d'une unité de séparation de bouillie à un réservoir de collecte par ou à travers une ligne de transfert de BSG, et dans lequel l'acidification des BSG est effectuée pendant le transfert des BSG au réservoir de collecte.

9. Procédé de préparation d'un aliment ou d'un ingrédient alimentaire, dans lequel le procédé comprend la réalisation d'un procédé selon l'une quelconque des revendications 1 à 8, et après la réduction en poudre desdites fractions, l'utilisation d'une poudre ainsi obtenue comme ingrédient dans la fabrication d'un aliment ou d'un ingrédient alimentaire.

10. Procédé selon la revendication 9, dans lequel l'ingrédient alimentaire est une farine.

11. Procédé selon la revendication 9, dans lequel l'aliment est sélectionné parmi des pains, des biscuits, des produits céréaliers, des collations cuites, des collations cuites par extrusion, des barres de confiserie et des pâtes alimentaires.

12. Procédé selon la revendication 9, dans lequel l'aliment ou l'ingrédient alimentaire est un complément de fibres.
